# EUROPEAN PATENT APPLICATION

(11) **EP 1 669 998 A1**
(43) Date of publication of application: **14.06.2006**
(21) Application number: 05110638.3
(22) Date of filing: 11.11.2005
(51) Int. Cl.: G11B 27/34, G11B 27/10

(54) **Video playback**

(30) Priority: 07.12.2004 KR 2004102356
(71) Applicant: Samsung Electronics Co., Ltd., Suwon-si, Gyeonggi-Do (KR)
(72) Inventor: Park, Sung-youn, Gwanak-gu Seoul (KR)
(74) Representative: Read, Matthew Charles

(57) **Abstract**

A method of video playback, the method comprising assigning numbers to bookmarks in a video recording and laying said numbers, together with information about the bookmarks, over the video playback.

## Description

The present invention relates to video playback.

Video playback devices (which can also be referred to as an "image reproducing apparatus") can playback a video recording recorded on a medium. A user can lay down markers (which can also be referred to as "selection points") on the recording for identifying important points in the recording and for conveniently identifying points which the user may wish to playback later. The video playback device can display information about the markers on screen. This feature is commonly known as a "bookmarking".

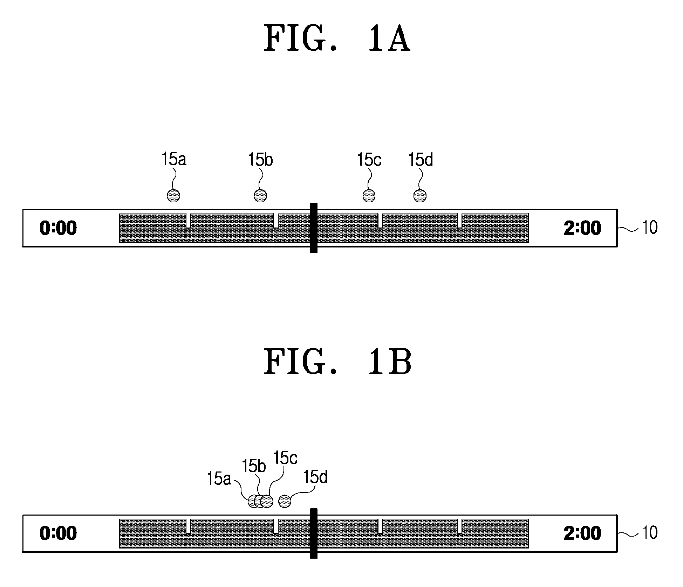

Referring to Figure 1A, a view is shown illustrating a method of displaying bookmarks. First, second, third and fourth bookmarks 15a, 15b, 15c, 15d are displayed on a progress bar 10.

Referring to Figure 1B, if the spacing between adjacent bookmarks 15a, 15b, 15c, 15d is reduced below a certain level, then they will begin to overlap and it may become difficult to distinguish between them.

Referring again to Figure 1A, a user can select one of the bookmarks 15a, 15b, 15c, 15d and change the playback position of the recording to the selected bookmark 15a, 15b, 15c, 15d. The bookmarks 15a, 15b, 15c, 15d may be coloured corresponding to the colour of buttons or keys on a remote controller (not shown). Thus, a bookmark 15a, 15b, 15c, 15d can be selected by pressing the correspondingly coloured button or key on the remote controller (not shown). However, this arrangement has the drawback that the number of bookmarks is limited according to the number of coloured keys.

The present invention seeks to provide improved bookmarking.

According to the present invention there is provided a method of video playback, the method comprising assigning numbers to bookmarks in a video recording and laying said numbers, together with information about the bookmarks, over the video playback.

The method may comprise assigning numbers according to the temporal order of the bookmarks. The method may comprise receiving an instruction to insert a new bookmark between existing bookmarks and renumbering at least some of the existing bookmarks. The method may comprise using still images of the selection points as thumbnail images to provide information about the selection points. The method may comprise receiving a selection point number and overlaying an image between first and second bookmarks. The method may comprise overlaying still images between first and second bookmarks in temporal or random order.

The method may further comprise displaying said numbers, together with information about the bookmarks, overlaying the video playback.

According to the present invention there is also provided a computer program comprising instructions for causing a video playback device to perform the method.

According to the present invention there is further provided a video playback device comprising means for assigning numbers to bookmarks in a video recording and means for laying said numbers, together with information about the bookmarks, over the video playback.

The device may further comprise means for display the video playback and means for recording a video input.

According to an aspect of the present invention, there is provided a method for offering selection point numbers to an image recorded on a recording medium, including: respectively assigning selection point numbers to the selection points of the recorded image; and overlapping information as to the selection points and the selection point numbers assigned to the selection points on an image to be reproduced.

The selection point numbers may be respectively assigned to the selection points based on temporal order of the selection points.

The method may further include: if a new selection point is added between existing selection points, assigning a selection point number to the new selection point based on temporal order of the existing selection points and the new selection point and adjusting selection point numbers assigned to the existing selection points.

Still images of the selection points as information as to the selection points may be overlapped as thumbnail images.

The method may further include: inputting a selection point number; and overlapping as information as to the selection points an image between an input point that is a selection point to which the input selection point number is assigned and a next point that is a selection point to which a selection point number next to the input selection point number is assigned as a thumbnail image.

Some still images of still images between the input point and the next point as the information as to the selection points may be alternately overlapped as thumbnail images.

Some still images of still images between the input point and the next point as the information as to the selection points may be alternately overlapped regardless of temporal order.

An image reproducing apparatus includes: a display information matching unit overlapping predetermined information on an image to be reproduced; and a controller controlling the display information matching unit to respectively assign selection point numbers to selection points of an image recorded on a recording medium and to overlap information as to the selection points and selection point numbers assigned to the selection points on the image to be reproduced.

The controller may respectively assign the selection point numbers to the selection points based on temporal order of the selection points.

If a new selection point is added between existing selection points, the controller may assign a selection point number to the new selection point and adjust the selection point numbers assigned to the existing selection points based on temporal order of the existing selection points and the new selection point.

The controller may control the display information matching unit to overlap still images of the selection points as information as to the selection points as thumbnail images.

The image reproducing apparatus may further include: a manipulator inputting a selection point number. Here, the controller may control the display information matching unit to overlap as information as to the selection point numbers an image between an input point that is a selection point to which the selection point number input via the manipulator is assigned and a next point that is a selection point to which a selection point number next to the input selection point number is assigned as a thumbnail image.

The controller may control the display information matching unit to alternately overlap some still images of still images between the input point and the next point as to the information as to the selection points as thumbnail images.

The controller may control the display information matching unit to alternately overlap some still images of still images between the input point and the next point as to the information as to the selection points as thumbnail images regardless of temporal order.

Embodiments will now be described, by way of example, with reference to Figures 2 to 8 of the accompanying drawings in which:
Figures 1A and 1B are views illustrating a method of displaying bookmarks;
Figure 2 is a block diagram of an a video playback device;
Figure 3 is a flowchart of a method for offering selection point numbers to a recording image;
Figure 4A is a view showing a display on which information regarding four selection points and selection point numbers are displayed;
Figure 4B is a view showing a display on which information regarding N selection points and selection point numbers are displayed;
Figure 4C is a view illustrating a method of overlaying detailed information regarding selection points; and
Figure 4D is a view illustrating a method of assigning a selection number to an additionally selected selection point and adjusting selection point numbers assigned to existing selection points.

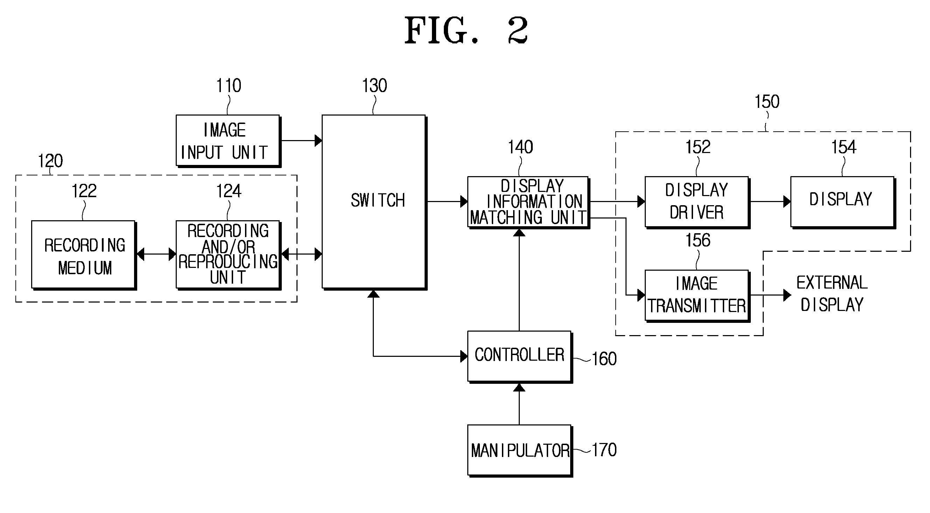

Figure 2 is a schematic block diagram of an embodiment of a video playback device (which can also be referred to as an "image reproducing apparatus") according to the present invention. Herein the terms "image" and "video" may be used interchangeably, unless otherwise specified. The device is arranged to playback a video recording recorded on a medium. The video recording may be in any format. A user can mark an important point or a point they wish to replay later using the device. The device is arranged to overlay (also known as to "overlap") information regarding those markers (hereinafter referred to as "selection points") selected by the user on a video recording. The device may assign selection point numbers to respective selection points so as to and provide information about the selection points, together with the selection point numbers.

The device includes an video image input unit 110, an image recording and/or playback unit 120, a switch 130, a display information matching unit 140, an image output unit 150, a controller 160 and a manipulator 170, which may also be referred to as a "user controller", and can take the form of a remote control unit.

The video input unit 110 (which may also be referred to as an "image input unit") supplies an input video (which may also be known as the "input image") from an external source (not shown) to the switch 130. For example, the image input unit 110 processes a broadcast selected through a tuner (not shown) or an image received from an external device, such as an external set-top box, an external TV or the like, for playback and supplies the processed broadcast or image to the switch 130.

The image recording and/or playback unit 120 records the input video and/or plays back the video recording. The unit 120 includes a recording medium 122 and a recording and/or playback unit 124. For example, the recording and/or playback unit 124 records the input video supplied through the switch 130 from the image input unit 110 on the recording medium 122. The recording and/or playback unit 124 also reads the video recording from the recording medium 122 and supplies the video recording to the switch 130.

The switch 130 performs a switching operation so that the video supplied from the video input unit 110 and the image recording and playback unit 120 is selectively output to the display information matching unit 140 or the input video supplied from the video input unit 110 is output to the image recording and/or playback unit 120. The switching operation of the switch 130 is controlled by the controller 160, as will be described in more detail later.

The display information matching unit 140 lays predefined information over the video output from the switch 130, i.e. the video to be played back. For example, overlaying the predefined information is achieved as follows: i) the controller 160 controls the display information matching unit 140 to lay information that a user wishes to obtain or that may be useful to the user over the video to be reproduced; and ii) the display information matching unit 140 is controlled by the controller 160 to lay information over the video to be reproduced.

The display information matching unit 140 may lay information over the image using an on-screen display (OSD) method or a graphical user interface method.

The image output unit 150 outputs the video output from the display information matching unit 140, i.e. the video over which the information laid, to an internal or external display. For example, a display driver 152 displays the image on a display 154 so as to achieve output of the image to the internal display, and an image transmitter 156 transmits the image to the external display (not shown).

The controller 160 controls the overall operation of the video playback device according to a user command received from a manipulator 170. For example, the controller 160 controls the display information matching unit 140 so as to lay information regarding the selection points over the image to be reproduced. The controller 160 also assigns selection point numbers to the selection points and controls the display information matching unit 140 so as to overlay the selection point numbers, together with the information about the selection points.

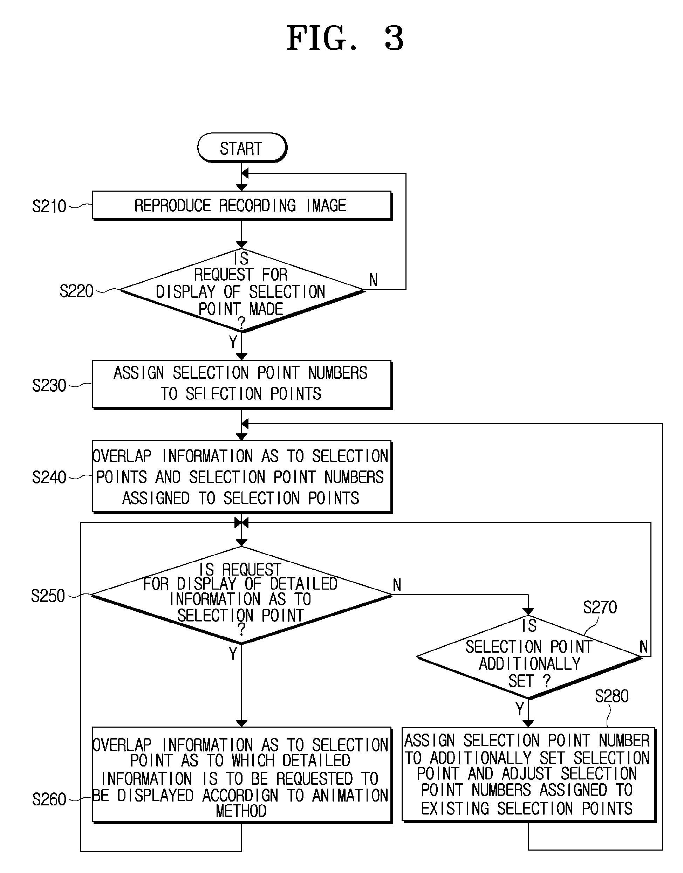

A process of selection point numbers with the information regarding the selection points over the video playback will now be described in more detail with reference to Figure 3. It is assumed that the selection points are predefined by a user.

The device play back the video recording (step S210). In particular, the image output unit 150 outputs the video recording from the image recording and/or playback unit 120.

The controller 160 determines during step S210, whether a request to display a selection point is input (step S22). The request may be input by the user via a key or button on the manipulator 170.

If the controller 160 determines that a request has been received, then it assigns selection point numbers to the selection points based on the temporal order of the selection points. For example, the controller 160 may assign a lower earlier selection point number to an earlier selection point and a higher selection point number to a later selection point.

The controller 160 instructs the display information matching unit 140 to lay the information regarding the selection points, together with the selection point numbers assigned to the selection points, over the video recording (step S24). Playback may be paused.

The controller 160 may instruct the display information matching unit 140 to overlay still images of the selection points as thumbnail images. The controller 160 prepares the still images of the selection points as the thumbnail images in advance and stores the thumbnail images in a memory provided inside the display information matching unit 140. This helps to speed up the overlaying process at step S240.

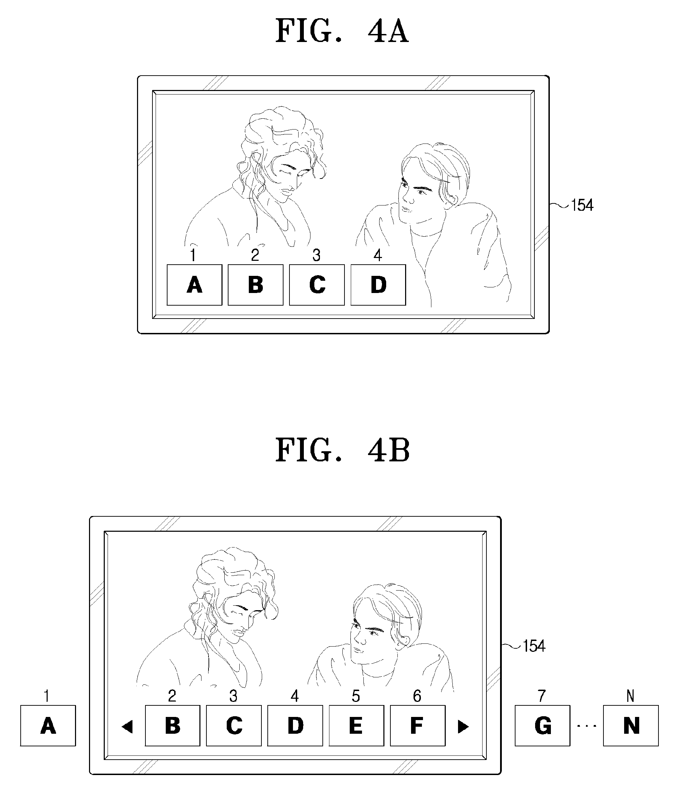

Figure 4A shows a display 154 on which information and selection point numbers for four selection points are displayed. As shown in Figure 4A, still images "A," "B," "C," and "D" of first, second, third and fourth selection points are displayed as thumbnail images for providing information about the first, second, third and fourth selection points respectively. The still images are displayed on a lower portion of the display 154. For convenience, , the letters "A", "B", "C" and "D" are shown instead of representational still images.

As shown in Figure 4A, selection point numbers "1", "2", "3", and "4" are displayed above the information relating to the first, second, third and fourth selection points.

Figure 4B shows a display 154 on which information for N (where N >5) selection points and selection point numbers are displayed. There is a limit as to the number of thumbnail images that are displayable on a lower portion of the display 154.In this case, the number is five. However, the number could be lower or higher. Thus, only information for five selection points, i.e., second through sixth selection points, is displayed on the display 154. Signs "◄" and "►" are also displayed to indicate that in addition to the five selection points, further selection points exist. Even in this case, selection point numbers "2," "3," "4," "5," and "6" are displayed above the selection point information, i.e. thumbnail images.

The user may request detailed information to be displayed regarding a specific selection point or set a new selection point.

If the controller 160 determines that the user has requested detailed information regarding a selection point (step S250), then the controller 160 instructs the display information matching unit 140 to lay information regarding the requested selection point using, for example, an animation method (step S260).

To make the request, the user may input a selection point number using a number key provided on the manipulator 170. Alternatively, the user may select the selection point using direction and selection keys provided on the manipulator 170.

The animation may involve overlaying an image between a selection point (hereinafter referred to as the "input point") to which an input selection point number is assigned and a selection point (hereinafter referred to as the "next point") to which a selection point number next to the input selection point number is assigned as a thumbnail image.

For example, the process at step S260 may be achieved by alternately overlaying some of the still images between the input point and the next point as thumbnail images.

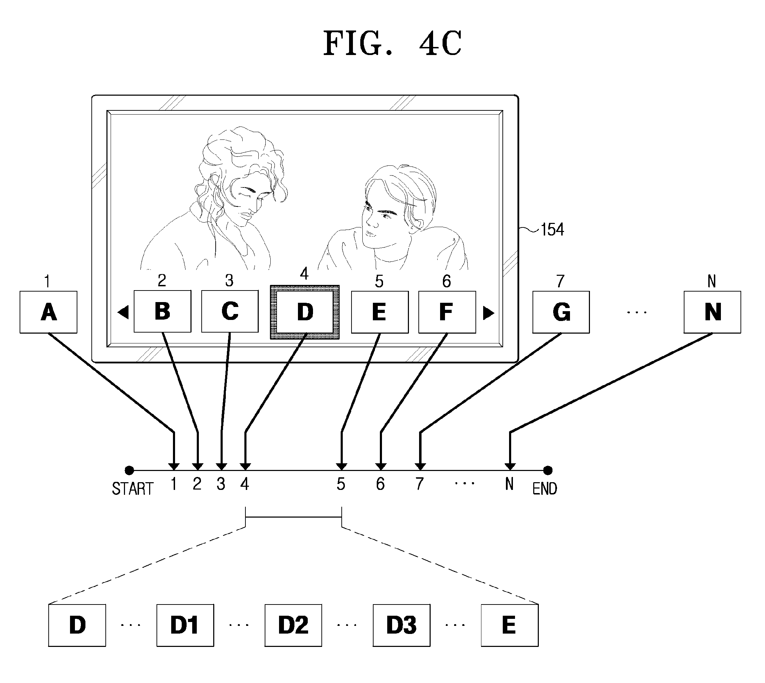

Step S260 will now be described in more detail with reference to Figure 4C. Figure 4C is a view illustrating a method of overlaying detailed information regarding a selection point.

If the user requests display of detailed information regarding the fourth selection point at step S250, in other words the user inputs the selection point number "4", still images "D", "D1", "D2", "D3", and "E" of still images existing between the fourth selection point (the input point) and the fifth selection point (the next point) are alternately displayed as thumbnail images on the information as to the fourth selection point.

The still images "D", "D1", "D2", "D3" and "E" displayed as thumbnail images may be alternately displayed in temporal order or may be alternately displayed regardless of the temporal order, i.e. randomly.

If the user additionally sets a new selection point (step S270), then the controller 160 assigns a selection point number to the additionally-set selection point and adjusts selection point numbers assigned to the existing selection points based on temporal order of the existing selection points and the additionally set selection point (step S280). The process returns to step S240 to overlay information regarding the new selection point and the adjusted selection point numbers on the video recording.

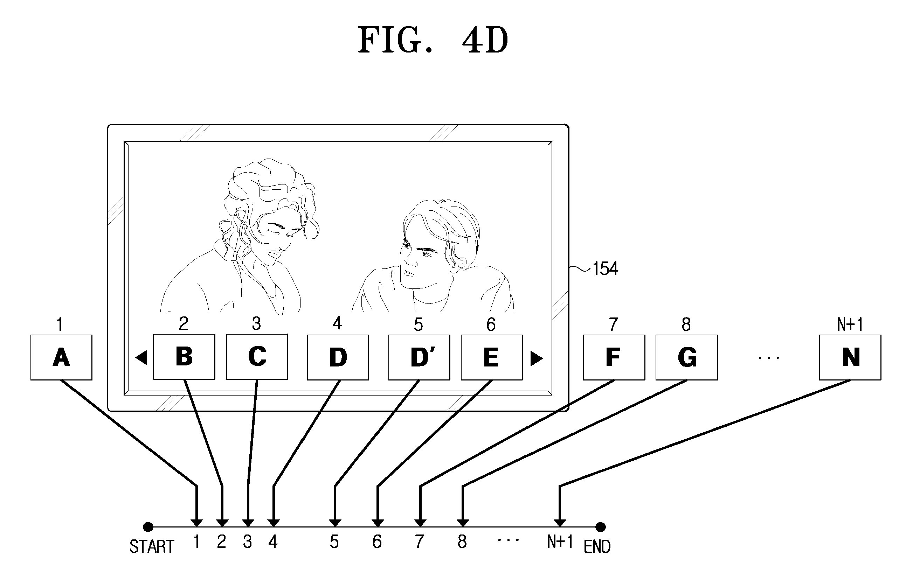

Figure 4D shows the results of performing steps S280 and S240 when a new selection point is added between the fourth and fifth selection points shown in Figure 4C. Referring to Figure 4D, since the temporal order of the new selection point is immediately after the fourth selection point, "5" is assigned as a selection point number of the new selection point. Also, the still image D' of the new selection point is displayed as a thumbnail image so as to provide information about the new selection point. In addition, selection point numbers "5", "6", "7", ... , and "N" (Figure 4C) assigned to the fifth, sixth, seventh, ..., and Nth selection points are respectively adjusted as "6," "7," "8," ..., and "N+1" (Figure 4D).

In the example hereinbefore described, information regarding the selection points is displayed together with the selection point numbers. Thus, the user can select the selection point numbers to change (jump) to a desired playback point.

The apparatus may employ time shift playback by which a predetermined quantity of broadcast content is stored in a First-In First-Out (FIFO) manner and then a specific time point of the stored broadcast is played back, selection point numbers may be assigned to selection points of the stored broadcast and the assigned selection point numbers may be additionally displayed.

In the example hereinbefore described, in addition to information about the selection points, selection point numbers are also provided. Thus, a user can conveniently select a selection point for playback using a number key. Also, since still images of the selection points are displayed as thumbnail images for providing information regarding the selection points, the selection points can be easily identified without overlapping. Moreover, the information can be displayed using animation to provide more detailed information about the selection points. Furthermore, a conventional method of differently displaying colours of selection points need not be used. Thus, the number of selection points is not limited by the number of coloured buttons on a remote control.

The foregoing embodiment and advantages are merely exemplary and are not to be construed as limiting the present invention. The present teaching can be readily applied to other types of apparatus. Also, the description of the embodiments of the present invention is intended to be illustrative, and not to limit the scope of the claims, and many alternatives, modifications, and variations will be apparent to those skilled in the art.

## Claims

1. A method of video playback, the method comprising:
assigning numbers to bookmarks in a video recording;
laying said numbers, together with information about the bookmarks, over the video playback.

2. A method according to claim 1, comprising:
assigning numbers according to the temporal order of the bookmarks.

3. A method according to claim 1 or 2, comprising:
receiving an instruction to insert a new bookmark between existing bookmarks; and
renumbering at least some of the existing bookmarks.

4. A method according to any preceding claim, comprising:
using still images of the selection points as thumbnail images to provide information about the selection points.

5. A method according to any preceding claim, further comprising:
receiving a selection point number; and
overlaying an image between first and second bookmarks.

6. A method according to claim 5, comprising:
overlaying still images between first and second bookmarks in temporal order.

7. A method according to claim 5, comprising:
overlaying still images between first and second bookmarks in random order.

8. A method according to any preceding claim, further comprising:
displaying said numbers, together with information about the bookmarks, overlaying the video playback.

9. A computer program comprising instructions for causing a video playback device to perform the method according to any preceding claim.

10. A video playback device comprising:
means (160) for assigning numbers to bookmarks in a video recording;
means (140) for laying said numbers, together with information about the bookmarks, over the video playback.

11. A device according to claim 10, further comprising:
means (152, 154) for displaying the video playback.

12. A device according to claim 11, further comprising:
means (122, 124) for recording a video input.

13. A method for offering selection point numbers to an image recorded on a recording medium, comprising:
respectively assigning selection point numbers to selection points of the recorded image; and
overlapping information as to the selection points and the selection point numbers assigned to the selection points on an image to be reproduced.

14. An image reproducing apparatus comprising:
a display information matching unit that overlaps predetermined information on an image to be reproduced; and
a controller that controls the display information matching unit to respectively assign selection point numbers to selection points of an image recorded on a recording medium and to overlap information as to the selection points and selection point numbers assigned to the selection points on the image to be reproduced.
